# FASCICULE DE BREVET EUROPEEN

(11) **EP 1 168 589 B1**
(45) Date de publication et mention de la délivrance du brevet: **07.05.2008**
(21) Numéro de dépôt: 01420133.9
(22) Date de dépôt: 12.06.2001
(51) Int. Cl.: H02M 7/538

(54) **Procédé et dispositif de contrôle d'un générateur de chauffage à induction**
Verfahren und Anordnung zum Kontrollieren eines Induktionsheizgenerators
Method and apparatus to control an induction heating generator

(30) Priorité: 28.06.2000 FR 0008286
(43) Date de publication de la demande: 02.01.2002
(73) Titulaire: SEB S.A., 69130 Ecully (FR)
(72) Inventeur: Gaulard, Hervé, 39700 Courtefontaine (FR); Pitot, Pierre, 38240 Meylan (FR)
(74) Mandataire: Kiehl, Hubert

(56) Documents cités:
- EP-A- 0 405 611
- WO-A-96/05648
- US-A- 5 933 341

## Description

La présente invention concerne un procédé de contrôle d'un générateur de chauffage par induction constitué par un onduleur demi-pont du type ZVS (Zéro Volt Switching en anglais) et un inducteur couplé à un suscepteur.

L'inducteur est un bobinage éventuellement associé à un concentrateur de champ magnétique destiné à induire des courants de Foucault dans un suscepteur. Un suscepteur est une charge, notamment une plaque en acier inox susceptible d'être chauffée par courant de Foucault. Une telle plaque peut constituer un fond de casserole, un fond de bouilloire, voire un fond de cuve de friteuse.

L'onduleur est un système électronique permettant d'alimenter l'inducteur en tension à une fréquence différente de celle du réseau d'alimentation électrique industriel ou domestique, il est constitué d'un système de redressement et de filtrage de la tension réseau, ce système alimentant un pont d'interrupteurs, usuellement de transistors IGBT ou MOS, branchés en série et pilotés par des circuits de commandes pour être respectivement l'un passant l'autre bloqué, puis changer inversement d'état à une fréquence prédéterminée en fonction de la puissance de chauffage voulue.

Le point commun des transistors est relié à une charge L, R en série équivalent à celle de l'ensemble inducteur-suscepteur, cette charge étant reliée à un condensateur ou au point commun d'un pont de condensateur pour former un circuit résonnant.

L'onduleur est dit ZVS (Zéro Volt Switching) parce qu'il est conçu pour fonctionner à une fréquence supérieure à la fréquence de résonance propre du circuit constitué par les condensateurs d'accord de l'onduleur et l'inducteur éventuellement couplé au suscepteur.

Une diode, dite de "roue libre", est montée en parallèle à chaque transistor et permet de laisser passer le courant lorsque le transistor correspondant est bloqué.

Par contrôle de l'onduleur, on comprend ici, non seulement les moyens pour contrôler la puissance délivrée au choix de l'utilisateur ou pré-établie pour un usage donné, mais aussi tous les moyens mis en oeuvre pour protéger l'onduleur contre des suscepteurs inadaptés qui peuvent être soit à l'origine de courants trop élevés soit de conditions de commutations inadaptées, ou encore pour garantir un déphasage minimum entre l'onde de courant et l'onde de tension afin d'assurer le fonctionnement de l'onduleur en mode ZVS.

L'invention concerne également une théière, une bouilloire, une friteuse, voire une cafetière, munie d'un tel générateur.

Le document EP 0 561 207 illustre un mode de réalisation d'onduleur du type mentionné précédemment, dans lequel le contrôle de la puissance délivrée s'effectue en réduisant le nombre de paquets d'alternances d'alimentation à 50 Hz délivrés à l'onduleur au cours d'une période prédéterminée, par exemple de l'ordre de 2 secondes.

De manière générale, les méthodes et les dispositifs utilisés dans l'art antérieur, comme par exemple dans celui décrit dans le document US 4 426 564, pour effectuer le contrôle d'un générateur de chauffage à induction sont complexes. En effet, ces méthodes nécessitent généralement une mesure de courant, une mesure de tension et un traitement d'une combinaison des valeurs mesurées. La mesure du courant nécessite en particulier un capteur de courant isolé qui est parfois placé entre les diodes de roues libres et les interrupteurs commandés du circuit demi-pont, cette dernière solution permettant de s'affranchir de la mesure de tension mais ayant l'inconvénient de générer des perturbations complémentaires lors des commutations des interrupteurs commandés.

Le document WO 96 05 648 décrit un mode de réalisation d'onduleur avec les caractéristiques techniques exprimées dans le préambule de la revendication indépendante 1.

Le but de la présente invention est de réaliser un procédé de contrôle d'un générateur de chauffage par induction comprenant un onduleur formé d'un pont d'interrupteurs électroniques branchés en série entre deux bus d'alimentation et pilotés par des circuits de commandes pour être alternativement l'un passant, l'autre bloqué, pont dont le point commun est relié à une charge composée d'un ensemble inducteur-suscepteur, cette charge étant reliée à un condensateur branché à l'un des bus d'alimentation ou au point commun d'un pont de condensateurs branchés en série entre les deux bus d'alimentation, une diode étant branchée en parallèle de chaque interrupteur électronique, ce procédé de contrôle devant être simple, efficace, fiable dans le temps, et ceci avec un minimum de mesure et le dispositif correspondant devant avoir un minimum de composants pour en réduire d'autant les coûts.

Selon l'invention le procédé de contrôle d'un générateur de chauffage par induction du type mentionné précédemment consiste :
- à détecter la durée de la tension négative au point commun des interrupteurs électroniques générée par le passage du courant dans une des diodes montées en parallèle, et en déduire le déphasage temporel effectif entre l'onde de tension aux bornes de l'inducteur et l'onde de courant traversant cet inducteur,
- et à utiliser ce déphasage temporel effectif dans une boucle de contre-réaction vers les circuits de commandes pour contrôler l'onduleur, soit pour assurer un déphasage minimum, soit pour arrêter le générateur suite à une brusque variation de déphasage due à un déplacement du suscepteur.

En d'autres termes, le procédé selon l'invention est caractérisé en ce que l'on utilise la mesure du déphasage temporel entre l'onde de tension aux bornes de l'inducteur et l'onde de courant traversant cet inducteur, ce déphasage étant évalué à partir de la tension négative générée par le passage du courant dans une des diodes montée en parallèle, ce signal pouvant soit être directement utilisé par un microcontrôleur, soit être transformé en un signal analogique proportionnel au déphasage de l'onde de courant et de tension. Ce signal peut être utilisé pour garantir un déphasage minimum de la tension et du courant c'est à dire une marge en temps suffisante par rapport à la période de résonance.

Grâce à ce procédé, la régulation du déphasage courant-tension est notablement simplifiée du fait qu'elle nécessite la mesure que d'une seule grandeur.

En outre, comme le déphasage entre la tension et le courant dépend de la présence ou non d'une charge, la variation du signal mesurée par le procédé selon l'invention permet de détecter la présence ou l'absence d'une charge.

De préférence, le procédé de contrôle du générateur de chauffage consiste à mesurer la durée pendant laquelle la tension générée aux bornes de la diode de roue libre connectée au bus V- est négative, et on considère que cette durée est égale au déphasage entre l'onde de tension aux bornes de l'inducteur et l'onde de courant traversant cet inducteur.

Utilement alors, le signal électrique généré présente la forme d'un créneau dont la durée peut soit être exprimée en valeur temporelle (par exemple de l'ordre de 1,2 µsec) soit exprimée en valeur relative (par exemple 10-15 % de la période).

Selon une autre caractéristique, les circuits de commandes du dispositif de contrôle d'un générateur de chauffage par induction selon l'invention sont prévus pour commander l'onduleur à une fréquence fixe ou variable et éventuellement asservie au déphasage courant/tension.

Notamment, ces circuits de commandes comprennent un premier module d'amplification et d'isolation destiné à délivrer des signaux de commande aux deux interrupteurs électroniques de l'onduleur, un second module branché à l'entrée du premier module et prévu pour commander l'onduleur à une fréquence fixe ou variable selon le signal reçu d'un troisième module de régulation. Plus particulièrement selon l'invention, le circuit de commande comprend en outre un cinquième module de mesure du temps de conduction de la diode représentatif du déphasage entre l'onde de courant et l'onde de tension, d'un quatrième module comportant un comparateur recevant d'une part un signal du cinquième module et d'autre part un signal de consigne et dont la sortie est branchée au troisième module afin de réguler la fréquence de l'onduleur en fonction du déphasage mesuré par le cinquième module.

De préférence, le cinquième module comprend une diode dont la cathode est reliée au point milieu du demi pont de transistors et l'anode à la base d'un transistor, par exemple bipolaire du type npn, la base étant elle-même reliée par une résistance par exemple de plusieurs kohms à une alimentation continue, l'émetteur du transistor bipolaire étant relié au bus d'alimentation pris comme référence, le collecteur du transistor étant ainsi en haute impédance pendant un temps représentatif du déphasage entre l'onde de tension et l'onde de courant.

En alternative, la diode peut être remplacée par une sonde de tension et un système d'écrêtage de la tension relié à la base du transistor bipolaire.

Selon une autre caractéristique importante de l'invention, le procédé de contrôle d'un générateur de chauffage par induction selon l'invention est remarquable en ce que l'on utilise la valeur de crête positive et/ou négative du courant lu par un capteur de courant, par exemple un shunt, placé sur le bus d'alimentation entre l'onduleur et un condensateur de filtrage d'entrée, en en ce que l'on arrête l'onduleur si l'une des valeurs dépasse un seuil prédéterminé.

Cette information est traitée de façon indépendante selon le sens du courant. En effet le maximum positif correspond à la moitié de la valeur crête du courant passant dans les interrupteurs commandés et le maximum négatif correspond à la moitié du courant commuté par les interrupteurs commandés. L'onduleur peut alors être arrêté en fonction de seuils préalablement réglés, ou la puissance de celui-ci peut être régulée de façon à ne pas entraîner de fonctionnement dangereux pour l'onduleur que ce soit à cause de courant commuté trop élevé ou de courant crête trop important dans les interrupteurs de puissance.

Le dispositif de contrôle d'un générateur de chauffage par induction selon l'invention comporte alors de plus :
- un capteur de courant placé sur le bus d'alimentation entre l'onduleur et un condensateur de filtrage d'entrée,
- un sixième module branché au capteur et permettant de détecter le courant crête passant dans les interrupteurs, et/ou,
- un septième module branché au capteur et permettant de détecter le courant commuté passant par les interrupteurs,
- et un huitième module, dont l'entrée est branchée au sixième et/ou au septième module, et permettant d'arrêter l'onduleur en fonction de valeur maximale préréglée ou de limiter la puissance de façon prioritaire par rapport à la régulation réalisée par le troisième module.

D'autres caractéristiques et avantages de l'invention ressortiront de la description qui va suivre, prise à titre d'exemple non limitatif, en référence aux figures annexées dans lesquelles:
- la figure 1 représente un schéma électrique d'un générateur selon l'invention;
- la figure 2 représente les diagrammes dans le temps respectivement du courant I_{M} et de la tension électrique V_{M} délivrés par un générateur de chauffage à induction selon l'invention comprenant deux interrupteurs T1 et T2 recevant respectivement des signaux de commandes VG_{T1} et VG_{T2} et le signal en créneau V_{PH} représentant le déphasage,
- la figure 3 représente le diagramme dans le temps du courant I_{M} passant dans l'inducteur et son image I_{IND} dans le capteur de courant I_{SHUNT} et de la tension électrique V_{M} délivrés par un générateur de chauffage à induction selon l'invention.

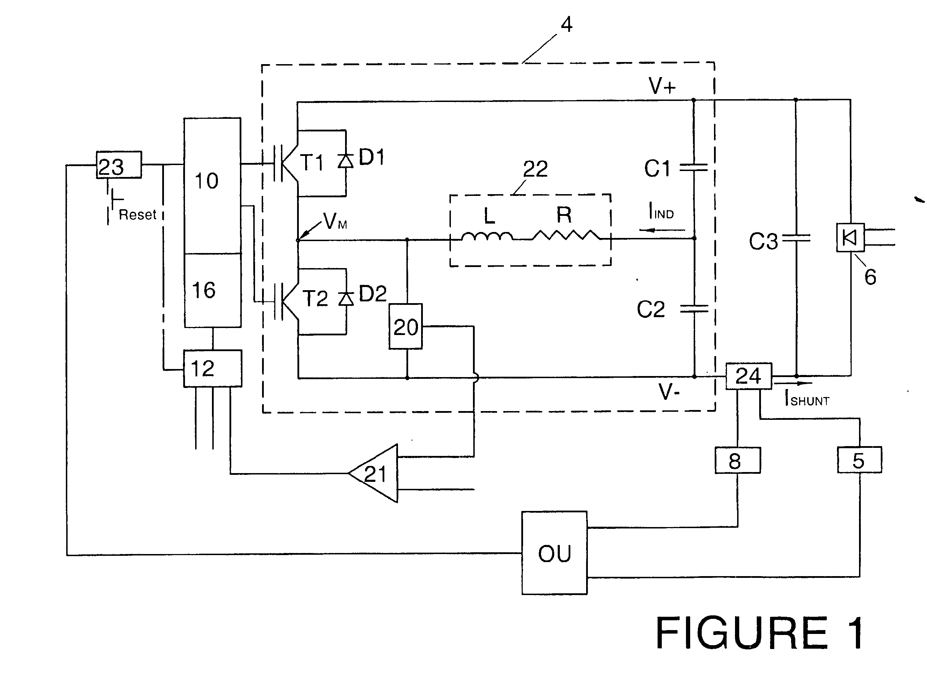

Le générateur illustré sur la figure 1 est alimenté à partir du secteur (par exemple, 230V alternatif 50 Hz) par un redresseur 6 branché à un dispositif de filtrage, représenté ici par un condensateur C3, délivrant une tension d'alimentation redressée de l'ordre de 320 alimentant un bus V+ et V-.

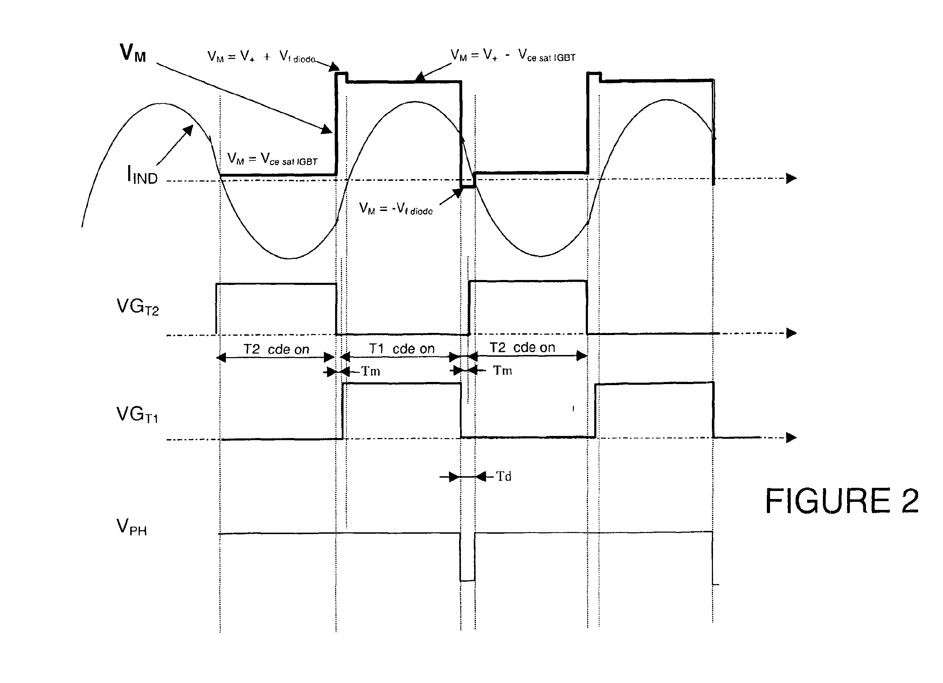

La figure 1 illustre, par ailleurs, un schéma de principe d'un onduleur demi-pont ZVS (Zéro Volt Switching en langue anglaise) alimentant un appareil de chauffage à induction. L'onduleur demi-pont 4 comporte, de façon connue en soi, deux interrupteurs T1 et T2 montés en série entre le bus d'alimentation positive V+ et le bus d'alimentation négative V-. Chaque interrupteur T1 et T2 est constitué par un transistor du type IGBT (Insulated-Gate Bipolar Transistor en langue anglaise) ou MOS monté respectivement en parallèle avec une diode D1 et une diode D2 dite "de roue libre". La tension V_{M} apparaissant au point commun, ainsi que l'intensité I_{IND} traversant l'inducteur sont illustrées sur la figure 2.

Le point commun des transistors T1 et T2 est relié au travers d'une charge 22 de type L, R en série au point commun du pont de condensateurs C1, C2 branchés également entre le bus d'alimentation positive V+ et le bus d'alimentation négative V-. La charge L,R est équivalente à celle de l'ensemble inducteur-suscepteur. Le suscepteur étant la charge couplée avec l'inducteur et pouvant être par exemple une théière, une casserole......

En référence à la figure 1, les transistors T1 et T2 sont reliés à un premier module 10, dit de "driver" assurant une amplification et une isolation et destiné à leur délivrer des signaux logiques de commande VG_{T1} et VG_{T2} à une fréquence F définie par un second module 16, pouvant par exemple être un variateur de fréquence de type VCO (Voltage Controlled Oscillator) ou PWM (Pulse Width Modulator) lui même piloté par un circuit de régulation 12.

Les signaux de commande VG_{T1} et VG_{T2} illustrés sur la figure 2 ont une forme rectangulaire, sont déphasés de 180° l'un par rapport à l'autre, et chacun de leur rapport cyclique est inférieur à 50% de telle sorte que à chaque commutation et pendant un court instant appelé temps mort Tm, ces signaux

VG_{T1} et VG_{T2} commandent les interrupteurs T1 et T2 simultanément à l'arrêt.

La fréquence du signal en créneau est générée par un troisième module de régulation 12, et il est variable entre un seuil maximum et un seuil minimum défini par des composants extérieurs, la fréquence instantanée étant définie par un niveau de tension reçu en son entrée à partir d'un quatrième module de comparateur 21. Ce comparateur reçoit sur une première entrée le signal d'un cinquième module 20 de détection de tension, en l'occurrence de tension négative, branché entre le bus V- et le point commun V_{M}. Ce comparteur reçoit sur une seconde entrée un signal de consigne, qui peut être soit un signal pré-réglé en atelier, soit un signal variable au moyen d'un potentiomètre par l'utilisateur, soit un signal généré par un micro-processeur lors de la détection d'une condition particulière du système de chauffage.

Le démarrage de l'appareil s'effectue à l'aide d'un dispositif appelé "soft start" intégré dans le module 16 qui peut être soit analogique soit numérique et qui permet de démarrer à une fréquence Fi nettement supérieure à la fréquence de résonance Fo du circuit oscillant L, R , C1, C2.

Alors, lorsque le signal VG_{T2} est à l'état "haut" pendant une durée "T2 cde on", le transistor T2 est passant, et le point commun est à une tension V_{M} égale à la tension du bus V- augmenté de la tension collecteur/émetteur Vce de saturation du transistor IGBT T2.

Le courant négatif passe alors du point milieu des condensateurs C1, C2 au travers de la charge L,R et de retour au travers du transistor T2. Ceci se traduit par une première portion de l'alternance négative du courant I_{M} illustré sur la figure 2 et ayant la forme correspondante à début de régime oscillant amortie entre C1 et C2 en réaction avec la charge L,R.

A la fin de la durée "T2 cde on", le signal de commande VG_{T2} du transistor T2 redevient bas ce qui ouvre (ou bloque) ce transistor T2. Le courant instantané I_{M}, de l'ordre de 15 ampères, traversant alors la charge R, L, ne peut que s'échapper par la diode D1 en parallèle du transistor T1. Cette diode devant alors être considérée comme "passante", la tension au point commun V_{M} est alors à la tension du bus V+ auquel s'ajoute la tension Vf de la diode D1.

A la fin du temps mort Tm prédéterminé par un réglage en atelier, le signal de commande VG_{T1} du transistor T1 devient haut pendant une durée "T1 cde on". Toutefois, ce transistor T1 étant unidirectionnel, il ne se met en oeuvre qu'une fois que le courant I_{M} traversant la diode D1 s'est annulé. Alors seulement, le courant I_{M} s'inverse, et, en devenant positif, traverse le transistor T1, la charge L, R puis le deuxième condensateur C2 pour revenir au bus V- selon un nouveau début de régime oscillant amorti en réaction avec la charge L,R.

A la fin de la période "T1 cde on", le signal de commande VG_{T1} du transistor T1 redevient bas, alors qu'un fort courant instantané positif I_{M} est encore présent. Ce courant ne peut alors s'écouler qu'au travers de la diode D2 qui doit alors être considérée comme "passante", faisant que la tension au point commun V_{M} est alors à la tension du bus V-, considérée comme base de référence, auquel se soustrait en outre la tension -Vf de la diode D2. Cette tension V_{M} au point commun devient alors momentanément inférieure à la tension de référence V-.

A la fin d'un second temps mort Tm, identique au premier, le signal VG_{T2} du transistor T2 redevient haut. Toutefois, ce transistor étant également unidirectionnel, il ne commence à entrer en fonction qu'une fois que le courant I_{M} traversant la diode D2 s'est annulé. Alors, le courant I_{M} s'inverse et, en redevenant négatif, traverse à nouveau la charge L, R à partir du pont de condensateur.

Ainsi, chaque diode de roue libre permet d'assurer la réversibilité du courant, notamment lorsque le courant I_{M} est en opposition par rapport à la tension V_{M}.

Plus particulièrement selon l'invention, l'examen minutieux du fonctionnement de ce circuit a permis de détecter que la tension V_{M}, notamment aux branches de la diode D2 et du transistor T2 devient momentanément négative par rapport à la tension de référence V-, et ceci justement pendant une durée correspondant au déphasage entre l'onde de tension aux bornes de l'inducteur et l'onde de courant traversant cet inducteur. Or une telle différence de tension, ainsi que sa durée, peut facilement être détectée par le cinquième module électronique 20.

Ce cinquième module 20 peut comprendre une diode haute tension dont la cathode est branchée au point milieu du demi pont et l'anode est branchée à la base d'un transistor, par exemple bipolaire du type npn, cette base étant par ailleurs branchée à une alimentation, par exemple de 5 Volts. Par ailleurs l'émetteur de ce transistor bipolaire est relié au bus V-.

Ainsi, tant que la tension V_{M} est supérieure à une valeur prédéterminée, le transistor bipolaire reste passant, et dès que la tension V_{M} descend en dessous de cette valeur, le transistor bipolaire devient bloquant comme illustré par la courbe V_{PH} de la figure 2. Ce signal V_{PH} peut alors, par exemple, piloter une horloge dont le nombre d'impulsions délivrées est représentatif de la durée. La durée de ce créneau, ou son rapport cyclique, peut être soit convertie en valeur numérique par un micro-processeur, soit convertie en valeur analogique.

Ce module 20 fournit donc une tension V_{PH} de durée proportionnelle au temps de conduction de la diode D2. Cette tension, dont l'amplitude est représentative du déphasage entre l'onde de tension aux bornes de l'inducteur et l'onde de courant traversant cet inducteur, est alors comparée par le quatrième module comparateur 21 à une valeur de consigne qui correspond au temps au moins nécessaire pour permettre à la commutation de s'effectuer correctement. Notamment, si le temps de conduction devient insuffisant, le comparateur 21 agit alors sur les modules 12 et 16 de façon à augmenter la fréquence de fonctionnement et à garantir ainsi un déphasage minimum entre l'onde de courant et l'onde de tension.

Selon une autre caractéristique de l'invention, le temps de conduction de la diode D2, ou le rapport cyclique tel que lu par le module 20, est envoyé à un circuit numérique ou analogique permettant de détecter la présence d'un suscepteur. Ce circuit peut être un simple détecteur de niveau détectant l'augmentation du déphasage lors de l'absence ou du retrait d'un suscepteur.

Selon un mode complémentaire de réalisation du dispositif de l'invention, le troisième module 12 ou le premier module 10 est relié à un huitième module 23 de sécurité qui permet d'assurer l'arrêt de l'onduleur en fonction d'une valeur de seuil de courant commuté ou de courant crête détectée par un sixième module 5 et septième module 8 mesurant respectivement les maximums des courants négatif et positif aux bornes d'un capteur de courant 24 non inductif placé sur le bus V- continu entre le condensateur de filtrage C3 et le condensateur C2. A titre d'exemple, ce capteur 24 peut être réalisé par un shunt.

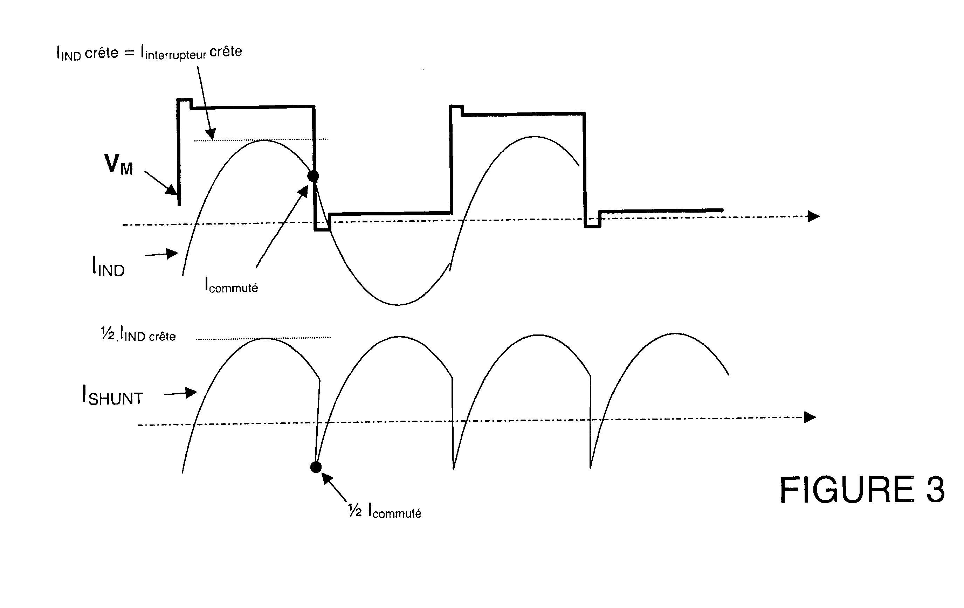

Le courant I_{IND} lu par le capteur 24 est illustré sur la figure 3. Ainsi, si le courant de crête positif détecté par le sixième module 5, qui est égal à 2 fois le courant crête interrupteur, est supérieur à un seuil préalablement réglé, ou si le courant de commutation, qui est égal à deux fois le maximum du courant négatif détecté par le septième module 8, est supérieur à un autre seuil préalablement réglé, soit la fréquence de fonctionnement de l'onduleur est augmentée par le troisième module 12 de régulation, soit l'onduleur est arrêté au niveau du premier module 10, l'onduleur devant alors être ré-initialisé.

Le générateur selon l'invention peut équiper des appareils électroménagers tels que par exemple des théières, des bouilloires, des friteuses, des cafetières ou tout autre appareil de cuisson. On pourrait même envisager d'adapter un onduleur du type décrit précédemment dans une alimentation basse tension à partir d'une tension secteur, autrement dénommé convertisseur de puissance, notamment dans des applications du petit électroménager.

D'autres améliorations peuvent être apportées à l'appareil dans le cadre des revendications.

Par exemple, on pourrait utiliser un montage en "pont complet", c'est à dire que l'on ne garde qu'un seul condensateur dans le circuit résonnant, et que l'on dédouble le pont d'interrupteurs électroniques.

## Revendications

1. Procédé de contrôle d'un générateur de chauffage par induction comprenant un onduleur formé d'un pont d'interrupteurs électroniques (T1, T2) branchés en série entre deux bus d'alimentation (V+, V-) et pilotés par des circuits de commandes (10, 12, 16) pour être alternativement l'un passant, l'autre bloqué, pont dont le point commun est relié à une charge composée d'un ensemble inducteur-suscepteur (L,R), cette charge étant reliée à un condensateur branché à l'un des bus d'alimentation ou au point commun d'un pont de condensateurs (C1, C2) branchés en série entre les deux bus d'alimentation, une diode (D1, D2) étant branchée en parallèle de chaque interrupteur électronique, **caractérisé en ce qu'**il consiste
- à détecter la durée de la tension négative au point commun des interrupteurs électroniques générée par le passage du courant dans une des diodes montée en parallèle, en déduire le déphasage temporel effectif entre l'onde de tension aux bornes de l'inducteur et l'onde de courant traversant cet inducteur,
- et à utiliser ce déphasage temporel effectif dans une boucle de contre-réaction vers les circuits de commandes pour contrôler l'onduleur.

2. Procédé selon la revendication 1, **caractérisé en ce qu'**il consiste à mesurer la durée pendant laquelle la tension générée aux bornes de la diode de roue libre est négative, et on considère que cette durée est égale au déphasage entre l'onde de tension aux bornes de l'inducteur et l'onde de courant traversant cet inducteur.

3. Dispositif pour la mise en oeuvre du procédé de contrôle d'un générateur de chauffage par induction selon la revendication 1, les circuits de commandes dudit générateur comprenant un premier module d'amplification et d'isolation (10) destiné à délivrer des signaux de commande aux deux interrupteurs électroniques de l'onduleur, un second module (16) branché à l'entrée du premier module et prévu pour commander l'onduleur à une fréquence fixe ou variable selon le signal reçu d'un troisième module de régulation (12), **caractérisé en ce qu'**il comprend un cinquième module (20) de mesure du temps de conduction de la diode représentatif du déphasage entre l'onde de courant et l'onde de tension, d'un quatrième module (21) comportant un comparateur recevant d'une part un signal du cinquième module (20) et d'autre part un signal de consigne et dont la sortie est branchée au troisième module (12) afin de réguler la fréquence de l'onduleur en fonction du déphasage mesuré par le cinquième module.

4. Dispositif de contrôle selon la revendication 3, **caractérisé en ce que** le cinquième module (20) comprend une diode dont la cathode est reliée au point milieu du demi pont de transistors (T1, T2) et l'anode à la base d'un transistor, la base étant elle-même reliée par une résistance à une alimentation continue, l'émetteur du transistor bipolaire étant relié au bus d'alimentation pris comme tension de référence.

5. Procédé selon l'une des revendications 1 ou 2 **caractérisé en ce que** l'on utilise la valeur de crête positive et/ou négative du courant lu par un capteur placé sur le bus d'alimentation entre l'onduleur et un condensateur de filtrage d'entrée, et **en ce que** l'on arrête l'onduleur si l'une des valeurs dépasse un seuil prédéterminé.

6. Dispositif de contrôle d'un générateur de chauffage par induction selon les revendications 3 ou 4, **caractérisé en ce qu'**il comporte
un capteur de courant (24) placé sur le bus d'alimentation entre l'onduleur et un condensateur de filtrage d'entrée,
un sixième module (5) branché au capteur et permettant de détecter le courant crête passant dans les interrupteurs, et/ou
un septième module (8) branché au capteur et permettant de détecter le courant commuté passant par les interrupteurs, et un huitième module (23), dont l'entrée est branchée au sixième et/ou au septième module, et permettant d'arrêter l'onduleur en fonction de valeur maximale préréglée ou de limiter la puissance de façon prioritaire par rapport à la régulation réalisée par le troisième module.

7. Théière, bouilloire, cafetière ou friteuse **caractérisée en ce qu'**elle comporte un dispositif conforme à l'une des revendications 3, 4 ou 6.

## Claims

1. A method of controlling an induction heater generator comprising an inverter formed by an electronic switch bridge (T1, T2) connected in series between two power supply buses (V+, V-) and controlled by control circuits (10, 12, 16) so that one of them conducts and the other does not conduct, in alternation, the bridge having a common point connected to a load made up of an induction coil and susceptor combination (L, R), the load being connected to a capacitor connected to one of the power supply buses or to the common point of a capacitor bridge (C1, C2) having capacitors connected in series between the two power supply buses, a diode (D1, D2) being connected in parallel with each electronic switch, the method being **characterized in that** it consists:
in detecting the duration of the negative voltage at the common point between the electronic switches as generated by current flowing through one of the parallel-connected diodes, and deducing therefrom the actual phase offset time between the voltage wave at the terminals of the induction coil and the current wave passing through said coil; and
in using this actual phase offset time in a negative feedback loop to the control circuits for controlling the inverter.

2. A method according to claim 1, **characterized in that** it consists in measuring the duration during which the voltage generated across the terminals of the freewheel diode is negative, and in assuming said duration to be equal to the phase offset between the voltage wave at the terminals of the induction coil and the current wave passing through said coil.

3. A device for implementing an induction heater generator control method according to claim 1, the control circuits of said generator comprising an amplification and isolation first module (10) for delivering control signals to the two electronic switches of the inverter, a second module (16) connected to the input of the first module and designed to control the inverter at a fixed or varying frequency depending on the signal received from a regulator third module (12), the device being **characterized in that** it comprises a fifth module (20) for measuring the diode conduction time representative of the phase offset between the current wave and the voltage wave, and a fourth module (21) comprising a comparator receiving both a signal from the fifth module (20) and a setpoint signal and having an output connected to the third module (12) to regulate the frequency of the inverter as a function of the phase offset measured by the fifth module.

4. A control device according to claim 3, **characterized in that** the fifth module (20) comprises a diode having its cathode connected to the midpoint of the transistor half-bridge (T1, T2) and its anode to the base of a transistor, the base itself being connected via a resistor to a DC power supply, the emitter of the bipolar transistor being connected to the power supply bus taken as a reference voltage.

5. A method according to claim 1 or claim 2, **characterized in that** use is made of the positive and/or negative peak value of the current read by a sensor placed in the power supply bus between the inverter and an input filter capacitor, and **in that** the inverter is stopped if one of the values exceeds a predetermined threshold.

6. A device for controlling an induction heater generator control device according to claim 3 or claim 4, **characterized in that** it comprises:
a current sensor (24) placed in the power supply bus between the inverter and an input filter capacitor;
a sixth module (5) connected to the sensor and serving to detect the peak current passing through the switches; and/or
a seventh module (8) connected to the sensor and serving to detect the switched current passing through the switches; and
an eighth module (23) having an input connected to the sixth and/or seventh module, and serving to stop the inverter as a function of a preset maximum value or to limit its power with priority over the regulation performed by the third module.

7. A tea pot, kettle, coffee pot, or deep fryer, **characterized in that** it includes a device according to any one of claims 3, 4, or 6.

## Patentansprüche

1. Verfahren zum Kontrollieren eines Generators für Induktionsheizung, mit einem Wechselrichter, der durch eine Brücke von elektronischen Schaltern (T1, T2) gebildet ist, die zwischen zwei Versorgungsbussen (V+, V-) in Reihe geschaltet und durch Steuerschaltungen (10, 12, 16) angesteuert sind, damit abwechselnd der eine leitend und der andere gesperrt ist, wobei der gemeinsame Punkt der Brücke mit einer Last verbunden ist, die aus einer Induktor-Suszeptor-Gruppe (L, R) gebildet ist, wobei die Last mit einem Kondensator verbunden ist, der an einem der Versorgungsbusse oder dem gemeinsamen Punkt einer Brücke von Kondensatoren (C1, C2) angeschlossen ist, die zwischen den beiden Versorgungsbussen in Reihe geschaltet sind, wobei eine Diode (D1, D2) zu jedem elektronischen Schalter parallel geschaltet ist, **dadurch gekennzeichnet, dass** es darin besteht,
- die Dauer der negativen Spannung am gemeinsamen Punkt der elektronischen Schalter zu erfassen, welche durch den Stromdurchfluß in einer der parallel geschalteten Dioden erzeugt ist, und daraus die effektive Zeitverschiebung zwischen der Spannungswelle an den Klemmen des Induktors und der diesen Induktor durchfließende Stromwelle abzuleiten,
- und die effektive Zeitverschiebung in einer Gegenkopplungsschleife zu den Steuerschaltungen zu verwenden, um den Wechselrichter zu kontrollieren.

2. Verfahren nach Anspruch 1, **dadurch gekennzeichnet, dass** es darin besteht, die Dauer zu messen, während welcher die an den Klemmen der Freilaufdiode erzeugte Spannung negativ ist, wobei davon ausgegangen wird, dass diese Dauer der Verschiebung zwischen der Spannungswelle an den Klemmen des Induktors und der durch diesen Induktor durchfließenden Stromwelle gleich ist.

3. Vorrichtung zum Durchführen des Verfahrens zum Kontrollieren eines Generators für Induktionsheizung nach Anspruch 1, wobei die Steuerschaltungen des Generators ein erstes Verstärkungs- und Isoliermodul (10) aufweist, das dazu bestimmt ist, an die beiden elektronischen Schalter des Wechselrichters Steuersignale zu liefern, ein zweites Modul (16), das am Eingang des ersten Moduls angeschlossen und dazu vorgesehen ist, um den Wechselrichter bei einer festen oder variablen Frequenz gemäß dem aus einem dritten Regelungsmodul (12) erhaltenen Signal zu steuern, **dadurch gekennzeichnet, dass** sie ein fünftes Modul (20) zum Messen der Stromführungsdauer der Diode, die für die Verschiebung zwischen der Stromwelle und der Spannungswelle repräsentativ ist, eines vierten Moduls (21) aufweist, das einen Komparator aufweist, der einerseits ein Signal des fünften Moduls (20) und andererseits ein Sollsignal empfängt und dessen Ausgang mit dem dritten Modul (12) verbunden ist, um die Frequenz des Wechselrichters in Abhängigkeit von der durch das fünfte Modul gemessenen Verschiebung zu regeln.

4. Kontrollvorrichtung nach Anspruch 3, **dadurch gekennzeichnet, dass** das fünfte Modul (20) eine Diode aufweist, deren Kathode mit dem Mittelpunkt der halben Brücke der Transistoren (T1, T2) und deren Anode mit der Basis eines Transistors verbunden ist, wobei die Basis selbst durch einen Widerstand mit einer Gleichstromeinspeisung verbunden ist, wobei der Emitter des bipolaren Transistors mit dem Versorgungsbus als Referenzspannung verbunden ist.

5. Verfahren nach einem der Ansprüche 1 oder 2, **dadurch gekennzeichnet, dass** der positive und/oder negative Spitzenwert des Stroms verwendet wird, der von einem Sensor gelesen wird, welcher auf den Versorgungsbus zwischen dem Wechselrichter und einem Eingangsfilterkondensator angebracht ist, und dass der Wechselrichter ausgeschaltet wird, wenn einer seiner Werte eine vorgegebene Schwelle überschreitet.

6. Vorrichtung zum Kontrollieren eines Generators für Induktionsheizung nach einem der Ansprüche 3 oder 4, **dadurch gekennzeichnet, dass** es folgendes aufweist:
einen auf den Versorgungsbus zwischen dem Wechselrichter und einem Eingangsglättungskondensator angebrachten Stromsensor (24),
ein sechstes Modul (5), das am Sensor angeschlossen ist und es ermöglicht, den durch die Schalter fließenden Spitzenstrom zu erfassen, und/oder
ein siebtes Modul (8), das am Sensor angeschlossen ist, und es ermöglicht, den durch die Schalter fließenden geschalteten Strom zu erfassen, und ein achtes Modul (23), dessen Eingang am sechsten und/oder siebten Modul angeschlossen ist und es ermöglicht, den Wechselrichter in Abhängigkeit von einem voreingestellten maximalen Wert auszuschalten oder die Leistung vorrangig bezüglich der vom dritten Modul ausgeführten Regelung zu begrenzen.

7. Teeautomat, Wasserkessel, Kaffeemaschine oder Fritteuse, **dadurch gekennzeichnet, dass** ein solches Gerät eine Vorrichtung nach einem der Ansprüche 3, 4 oder 6 aufweist.
